# EUROPEAN PATENT APPLICATION

(11) **EP 1 508 423 A2**
(43) Date of publication of application: **23.02.2005**
(21) Application number: 04254414.8
(22) Date of filing: 23.07.2004
(51) Int. Cl.: B29C 45/20

(54) **Process for producing an optical disc substrate**

(30) Priority: 24.07.2003 JP 2003200912
(71) Applicant: Fuji Photo Film Co., Ltd., Kanagawa (JP)
(72) Inventor: Asano, Katsuki, c/o Fuji Photo Film Co., Ltd., Odawara-shi, Kanagawa (JP)
(74) Representative: Stevens, Jason Paul

(57) **Abstract**

The present invention provides a process for producing an optical disc substrate by injection-molding a melted resin, through a nozzle (22) of an injection cylinder (20), into a cavity (50) of a mold having a stamper (40) at at least one of a cavity side part (10) and a force side part (30), a process in which at least a face of the nozzle (22), which contacts the resin, is coated with an inorganic coating such as TiN, BC (boron carbide) or DLC (diamond-like carbon).

## Description

### BACKGROUND OF THE INVENTION

### Field of the Invention

The present invention relates to a process for producing an optical disc substrate, in particular, a process for producing an optical disc substrate used in an optical disc such as a CD or DVD.

### Description of the Related Art

Recently, along with increasing demands for improvements in recording density, attempts have also been made to reduce the length of diameters of laser rays. When a diameter of a laser ray becomes small, the adulteration of molded products (such as substrates) by foreign substances becomes a serious problem. Examples of foreign substances are black marks, which are caused by the burning of resin.

It has been established that the burning of resin (black marks) occurs not only because of the temperature of the resin at a time that the resin is molded, but also due to oxidization of the resin which is catalyzed by a material (ferrous material) of the portion that the resin contacts.

When a nozzle is fitted into a mold in a state in which there is a substantial difference between the temperature of the nozzle (280 to 360°C) and that of the mold (50 to 140°C), the temperature of the nozzle drops below a set temperature. Consequently, a heater for the nozzle remains continuously switched on, the temperature of only the heater portion rises, and burning of resin occurs. Alternatively, the temperature of the nozzle can drop too far, and on occasions a flow mark may consequently develop.

Once foreign substances such as black marks occur, works such as purging (wasteful injection of resin), cleaning of the insides of cylinders, and replacements of nozzles become necessary. Thus, production efficiency is substantially reduced. The quality of molded products is significantly affected by the temperature of the resin at the time that the resin is molded, in particular, a temperature of resin positioned in the nozzle.

In related art, research has been conducted into injection-molding metal-molds for reducing thermal strain on substrates (see, for example, Japanese Patent Application Laid-Open (JP-A) No. 2000-158502). However, studies have been extremely rare on methods of preventing the occurrence of the kind of black marks and flow marks mentioned above, and thus enhancing production efficiency.

Furthermore, even when one study into avoiding the occurrence of black marks and flow marks was carried out (see, for example, JP-A No. 2002-222545), a comprehensive investigation involving consideration of items such as molding machines and molds was to all intents and purposes neglected.

### SUMMARY OF THE INVENTION

The present invention has been made in the light of the situation described above, and provides a process for producing an optical disc substrate in which the occurrence of black marks, flow marks and others defects is avoided, and production efficiency, in particular yield, is enhanced.

The inventor has carried out intensive studies, and has completed the invention described below.

A first aspect of the invention is to provide a process for producing an optical disc substrate by injection-molding a melted resin, through a nozzle of an injection cylinder, into a cavity of a mold having a stamper at at least one of a cavity side part (fixed-side mold) and a force side part (movable-side mold), a process in which at least a face of the nozzle, which contacts the resin, is coated with an inorganic coating.

A second aspect of the invention is to provide a process for producing an optical disc substrate by injection-molding a melted resin, through a nozzle of an injection cylinder, into a cavity of a mold having a stamper at at least one of a cavity side part and a force side part, a process in which a heat insulator is provided at least between the nozzle and a resin inlet made in a sprue portion of the cavity side part, a resin inlet with which the nozzle is brought into close contact.

A third aspect of the invention is to provide an optical disc substrate produced by a process of injection-molding a melted resin, through a nozzle of an injection cylinder, into a cavity of a mold having a stamper at at least one of a cavity side part and a force side part, a process in which at least a face of the nozzle, which contacts the resin, is coated with an inorganic coating.

A fourth aspect of the invention is to provide an optical disc substrate produced by a process of injection-molding a melted resin, through a nozzle of an injection cylinder, into a cavity of a mold having a stamper at at least one of a cavity side part and a force side part, a process in which a heat insulator is provided at least between the nozzle and a resin inlet made in a sprue portion of the cavity side part, a resin inlet with which the nozzle is brought into close contact.

In any of the above aspects of the invention, it is preferable to provide the stamper at the force side part.

### BRIEF DESCRIPTION OF THE DRAWINGS

Fig. 1 is a partial sectional view illustrating a part of an injection molding machine etc. which can be used in the production process of the present invention.
Fig. 2 is a partial sectional view illustrating a part of another injection molding machine etc. which can be used in the production process of the invention.

### DETAILED DESCRIPTION OF THE INVENTION

### [Process for producing an optical disc substrate]

The optical disc substrate of the present invention is produced by a process in which at least a resin-contacting face of a nozzle of an injection cylinder in an injection molding machine of a type regularly used is coated with an inorganic coating, or alternatively a heat insulator is provided in such an injection molding machine, between the nozzle and a resin inlet made in a sprue portion of a cavity side part of the injection molding machine.

The process for producing an optical disc substrate according to the invention is described in detail hereinafter. (First production process)

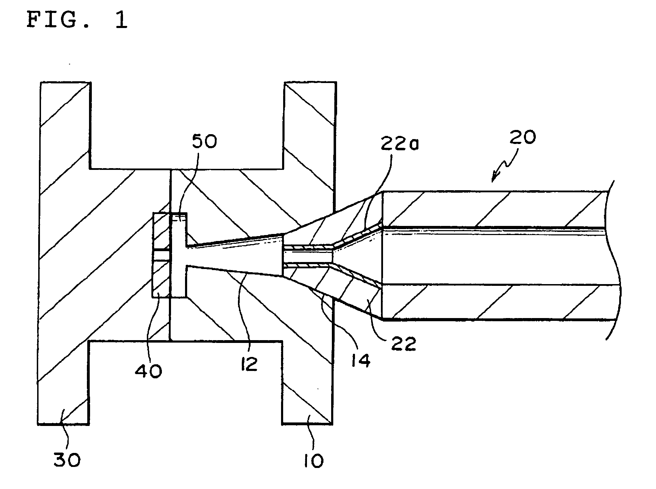

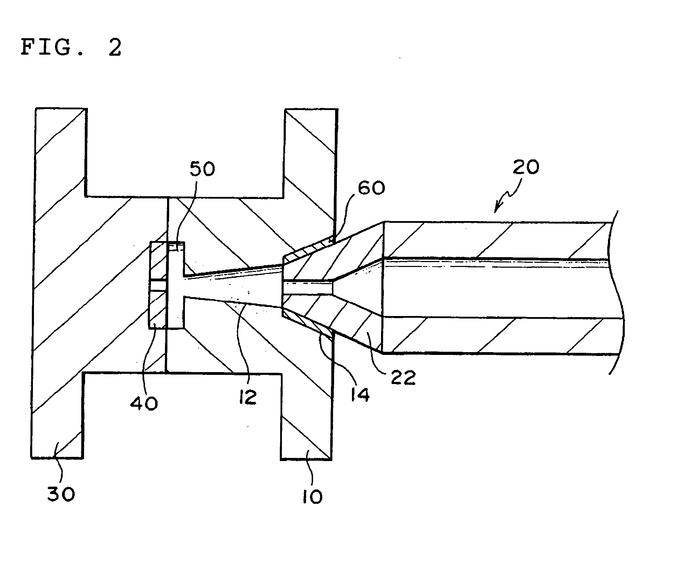

Fig. 1 illustrates a part of an injection molding machine and a mold (hereinafter on occasions referred to as an "injection molding machine etc.") which can be used in a first process for producing an optical disc substrate according to the invention. In the drawings (Figs. 1 and 2), the injection molding machine etc. is illustrated in a somewhat exaggerated fashion in order to facilitate understanding.

The injection molding machine illustrated in Fig. 1 has a force side part 30, a cavity side part 10, and an injection cylinder 20, and the force side part 30 and the cavity side part 10 together form a cavity 50.

A stamper 40 is fixed onto the cavity 50 side of the force side part 30 by means of a stamper-fixing means (not illustrated). Alternatively, the stamper 40 may be provided at the cavity side part 10. (This is also the case in a second production process which will be explained later.)

The injection cylinder 20 contains a melted resin, and is arranged so as to be able to approach the cavity side part 10, or to move away therefrom. A nozzle 22 of the injection cylinder 20 is brought into close contact with a resin inlet 14 in a sprue portion 12 of the cavity side part 10.

The "nozzle" is a portion which is bonded to the tip of the injection cylinder, and which, when the resin is molded, is brought into close contact with the resin inlet in the sprue portion of the cavity side part, so as to form a passage for the melted resin to flow. Accordingly, in the case illustrated in Fig. 1, the resin inside the injection cylinder 20 is injected into the cavity 50 through the nozzle 22.

In the first production process of the invention, at least a resin-contacting face of the nozzle 22 is coated with an inorganic coating 22a. As the material for the inorganic coating 22a, it is preferable to use TiN, BC (boron carbide), or DLC (diamond-like carbon).

The thickness of the inorganic coating 22a is preferably from 1 to 10 µm, more preferably from 1 to 5 µm. The inorganic coating 22a can be formed by a method such as PVD (physical vapor deposition) or CVD (chemical vapor deposition).

The faces of conventional nozzles, which contact a melted resin, have traditionally been made of iron, or ferrous material. It is known that when iron is exposed to a resin-contacting face, iron functions as a catalyst and causes a catalytic reaction, thereby accelerating oxidization of the resin.

However, in the first production process of the invention, the inorganic coating for coating a ferrous material described above is formed on at least the resin-contacting face of the nozzle 22; therefore, the development of the kind of catalytic reaction mentioned above can be suppressed. As a result, defects resulting from oxidization, such as black marks, in the molded substrate can be prevented, and production efficiency such as yield can be enhanced.

Since the inorganic coating is also superior in qualities such as heat resistance, the formation of this coating can be effective in enhancing durability of the nozzle 22.

It is essential that the inorganic coating be formed on the resin-contacting face as described above. Taking into consideration suppression of the catalytic reaction and durability of the molding machine, the coating may also be formed on a part of an inner face of the injection cylinder 20 or over its entire inner face.

The resin used may be selected at will from various materials used as substrate materials of conventional optical discs.

Specific examples thereof include polycarbonate; acrylic resins such as polymethyl methacrylate; vinyl chloride based resins such as polyvinyl chloride and vinyl chloride copolymer; epoxy resins; amorphous polyolefins; and polyesters. If desired, these may be used in combination.

Of the above-mentioned materials, amorphous olefins and polycarbonate are preferable from the viewpoint of moisture resistance, dimensional stability and low costs. Polycarbonate is particularly preferable. A thickness of the substrate is preferably from 0.5 to 1.2 mm, more preferably from 0.6 to 1.1 mm

When the optical disc substrate produced by the production process of the invention is used, for example, as an optical disc in which information can be recorded, such as a CD-R or a DVD-R, guide grooves for tracking or irregularities (pre-grooves) for representing data such as address signals are made in the molded substrate by means of the stamper 40.

In the case of DVD-Rs or DVD-RWs, the track pitch of pre-grooves is preferably set into the range of 300 to 900 nm, more preferably the range of 350 to 850 nm, and even more preferably the range of 400 to 800 nm.

When the track pitch is less than 300 nm, it is difficult to form the pre-grooves precisely and further a problem of crosstalk may be caused. When the pitch is more than 900 nm, a problem that the recording density is lowered may be caused.

The depth (groove depth) of the pre-grooves is preferably set into the range of 100 to 160 nm, more preferably the range of 120 to 150 nm, and even more preferably the range of 130 to 140 nm.

When the depth is less than 100 nm, a sufficient recording modulation degree may not be obtained. When the depth is more than 160 nm, the reflectance may be largely lowered.

The half width of the pre-grooves is preferably set into the range of 200 to 400 nm, more preferably the range of 230 to 380 nm, and even more preferably the range of 250 to 350 nm.

When the half width is less than 200 nm, the grooves of the stamper are not sufficiently transferred when the resin is molded or the error rate of recording may be raised. When the half width is more than 400 nm, pits formed at the time of recording widen so that crosstalk may be caused or a sufficient modulation degree may not be obtained.

In the case of CD-Rs or CD-RWs, the track pitch of the pre-grooves is preferably set into the range of 1.2 to 2.0 µm, more preferably the range of 1.4 to 1.8 µm, and even more preferably the range of 1.55 to 1.65 µm.

The depth (groove depth) of the pre-grooves is preferably set into the range of 100 to 250 nm, more preferably the range of 150 to 230 nm, and even more preferably the range of 170 to 210 nm.

The half width of the pre-grooves is preferably set into the range of 400 to 650 nm, more preferably the range of 480 to 600 nm, and even more preferably the range of 500 to 580 nm.

Critical significances of these numerical ranges of the pre-grooves are the same as those about the above-mentioned DVD-Rs or DVD-RWs.

After the resin is filled through the nozzle 22 into the cavity 50, a clamping force (of, for example, 140 to 400 kN) is applied to the mold under the same conditions as in ordinary molding processes. The mold is then cooled to room temperature, and then the force side part 30 is opened to take out the molded substrate. In the molded substrate, defects such as black marks are not present and the pits or grooves made in the stamper 40 are satisfactorily transferred.

### (Second production process)

Fig. 2 illustrates as an example an injection molding machine which can be used in a second process for producing an optical disc substrate according to the invention.

The injection molding machine is not a machine in which the resin-contacting face of a nozzle 22 is coated with an inorganic coating, but rather is a machine having a structure in which a heat insulator 60 is provided between the nozzle 22 and a resin inlet 14 in a sprue portion 12 of a cavity side part 10.

At the time that the substrate is molded, there is a substantial difference in temperature between the temperature of the mold (50 to 140°C) and that of the melted resin inside the injection cylinder (280 to 360°C at the nozzle part). When the nozzle, which has a high temperature, contacts the mold, which has a low temperature, in a state in which the difference in temperature is so pronounced, the mold absorbs the heat of the nozzle, the temperature of the nozzle drops, and the temperature of the resin remaining inside the nozzle drops. In consequence, the fluidity of the resin deteriorates and defects such as flow marks occur.

On the other hand, in the second production process of the invention, a heat insulator 60 is provided between the nozzle 22 and the resin inlet 14 in the cavity side part 10 (in a contact portion) ; therefore, rapid changes in temperature are eliminated, and the occurrence of defects such as flow marks is prevented. As a result, production efficiency such as yield can be enhanced.

As the heat insulator, an ordinary heat insulator can be used. Specifically, a heat resistant resin such as bakelite or a polyimide resin can be used.

The place where the heat insulator is provided is preferably at least a portion outside the nozzle 22 and in contact with the resin inlet 14, or a portion of the resin inlet 14 which is in contact with the nozzle 22.

After the resin has been poured into the cavity 50, the necessary clamping force is applied to the mold in the same way as during the first production process of the invention, so as to produce an optical disc substrate. The materials used as a resin for the optical disc substrate are the same as in the first production process.

The above is a description of production processes for the optical disc substrate of the invention based on drawings. However, the drawings merely illustrate examples, and the invention is not limited thereto. One of the most preferable embodiments of the invention could be said to be a process in which the first production process and the second production process of the invention are combined.

In other words, this is an embodiment in which the resin-contacting face of a nozzle is coated with an inorganic coating, and further a heat insulator is provided between the nozzle and a resin inlet made in a cavity side part, thereby producing an optical disc substrate. According to this process, the occurrence of defects such as black marks or flow marks can be avoided with greater certitude, production efficiency can be enhanced, and, in particular, yield improved.

### [Process for producing an optical disc]

The optical disc substrate produced as described above can be applied to optical discs having a recording layer in which information can be recorded and reproduced by a laser ray or optical discs having record portions (pits) in which reproducible information is recorded by a laser ray.

Examples of the former include write-once type optical discs and rewritable optical discs, such as CD-Rs, CD-RWs, DVD-Rs, DVD-RWs and DVD-RAMs. Examples of the latter include optical discs in which information is beforehand written, such as CDs and DVDs.

The structure of the optical disc having a recording layer is, for example, a structure in which the recording layer, a light-reflective layer and a protective layer are successively formed on the substrate produced by the invention, or a structure in which at least the recording layer, a light-reflective layer, an adhesive layer, and a protective layer substrate (dummy substrate) are successively formed on the substrate.

The following describes each of the layers. The structures and materials of the layers are mere examples. (Recording layer)

In CD-Rs or DVD-Rs, the recording layer thereof is formed by dissolving a dye, which is a recording material, together with a binder etc. into a suitable solvent to prepare a coating solution, and applying this coating solution onto the substrate face in which pre-grooves are made by spin coating, and then drying the applied solution.

The temperature when the spin coating is used is preferably 23°C or higher, more preferably 25°C or higher. The upper limit of the temperature is not particularly limited, but is required to be lower than the flash point of the solvent. The upper limit is preferably 35°C.

When the temperature is less than 23°C, the solvent dries slowly and a desired dye film thickness (recording layer thickness) may not be obtained. Further, the application and drying may take a longer time and productivity of the optical disc may be lowered.

Examples of the dye include cyanine dyes, oxonol dyes, metal complex dyes, azo dyes, and phthalocyanine dyes. Of these examples, phthalocyanine dyes are preferable.

It is preferable to use dyes described in JP-ANos. 4-74690, 8-127174, 11-53758, 11-334204, 11-334205, 11-334206, 11-334207, 2000-43423, 2000-108513, 2000-1558818, and so on.

Examples of the solvent in the coating solution include esters such as butyl acetate, ethyl lactate, and 2-methylethyl acetate; ketones such as methyl ethyl ketone, cyclohexanone, and methyl isobutyl ketone; chlorinated hydrocarbons such as dichloromethane, 1,2-dichloroethane, and chloroform; amides such as dimethylformamide; hydrocarbons such as methylcyclohexane; ethers such as tetrahydrofuran, ethyl ether, and dioxane; alcohols such as ethanol, n-propanol, isopropanol, n-butanol, and diacetone alcohol; fluorine-containing solvents such as 2,2,3,3-tetrafluoropropanol; and glycol ethers such as ethylene glycol monomethyl ether, ethylene glycol monoethyl ether, and propylene glycol monomethyl ether.

The solvents can be used alone or in combination of two or more thereof, considering the solubility of the used recording material therein. Furthermore, various additives such as an antioxidant, a UV absorbent, a plasticizer and a lubricant may be added to the coating solution in accordance with purpose.

In the case that the above-mentioned binder is used, examples thereof include natural organic polymer materials such as gelatin, cellulose derivatives, dextran, rosin, and rubber; and synthetic organic polymers, for example, hydrocarbon resins such as polyethylene, polypropylene, polystyrene, and polyisobutylene, vinyl resins such as polyvinyl chloride, polyvinylidene chloride, and polyvinyl chloride/polyvinyl acetate copolymer, acrylic resins such as polymethyl acrylate, and polymethyl methacrylate, polyvinyl alcohol, chlorinated polyethylene, epoxy resin, butyral resin, rubber derivatives, and initially-condensed products of a thermoplastic resin such as phenol/formaldehyde resin. When the binder also is used as the material for the recording layer, the mass of the used binder is generally from 0.01 to 50 times, preferably from 0.1 to 5 times the mass of the recording material. The concentration of the recording material in the thus-prepared coating solution is generally from 0.01 to 10% by mass, preferably from 0.1 to 5% by mass.

As the coating method thereof, spin coating is used as described above. Equipment used at this time may be conventional equipment.

The recording layer may be monolayered or multilayered. The thickness of the recording layer is generally from 20 to 500 nm, preferably from 30 to 300 nm, more preferably from 50 to 100 nm.

Various anti-color fading agents may be incorporated into the recording layer in order to improve the light fastness thereof.

As the anti-color fading agent, a singlet oxygen quencher is generally used. As the singlet oxygen quencher, ones described in known publications such as patent specifications can be used.

Specific examples thereof include singlet oxygen quenchers described in JP-A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995, and4-25492,and Japanese PatentApplication Publication (JP-B) Nos. 1-38680 and 6-26028, DE Patent No. 350399, and the Journal of the Chemical Society of Japan, 1992, Oct., p. 1141.

The amount of the used anti-color fading agent, for example, the singlet oxygen quencher is usually from 0.1 to 50% by mass, preferably from 0.5 to 45% by mass, more preferably from 3 to 40% by mass, and even more preferably from 5 to 25% by mass of the dye.

In the case of CD-RWs or DVD-RWs, the recording layer thereof is preferably made of a phase-change optical recording material which can turn into at least two states of a crystalline state and an amorphous state and which includes at least Ag, Al, Te and Sb. This recording layer can be formed by a known method.

If necessary, a known derivative layer may be formed on the recording layer.

### (Light-reflective layer)

After the formation of the recording layer, a light-reflective material is subjected to vapor deposition, sputtering or ion-plating on the recording layer, so as to form a light-reflective layer. At the time of the formation of the light-reflective layer, a mask is usually used to adjust an area where the light-reflective layer is to be formed.

In the light-reflective layer, a light-reflective material having a high reflectance to a laser ray is used. The reflectance is preferably 70% or more.

Examples of the light-reflective material which has high light reflectance include metals and semi-metals, such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn and Bi; and stainless steel. These light-reflective materials may be used alone, or in combinations of two or more thereof, or may be used in the form of alloy. Of these examples, preferable are Cr, Ni, Pt, Cu, Ag, Au, Al and stainless steel. Particularly preferable are Au, Ag and Al, and alloys thereof. Most preferable are Ag and Al, and alloys thereof.

The thickness of the light-reflective layer is generally from 10 to 300 nm, preferably from 50 to 200 nm.

### (Protective layer and Protective substrate)

After the formation of the light-reflective layer, a protective layer is formed on the light-reflective layer.

The protective layer is formed by spin coating. The use of spin coating makes it possible to form the protective layer without causing damage (for example, the dissolution of the dye or chemical reaction of the dye with the material of the protective layer) to the recording layer. The number of rotations in the spin coating is preferably from 50 to 8000 rpm, more preferably from 100 to 5000 rpm in order to make the protective layer homogeneous and prevent damage from being caused to the recording layer.

In the case that a UV curable resin is used in the protective layer, after the formation of the protective layer by the spin coating, ultraviolet rays from an ultraviolet radiating lamp (a metal halide lamp) are radiated onto the protective layer to cure the UV curable resin.

In order to remove thickness unevenness in the protective layer to be formed, the resin before being cured may be allowed to stand still for a given time or may be subj ected to appropriate treatment.

The protective layer prevents the invasion of water into the recording layer, or the generation of blemishes therein. The material for forming the protective layer is preferably a UV curable resin, a visible ray curable resin, a thermosetting resin, silicon dioxide or some other material, and is more preferably a UV curable resin. Examples of the UV curable resin are UV curable resins sold as "SD-640", "SD-347" and "SD-694" (trade name, manufactured by Dainippon & Ink Chemicals, Inc.), and "SKCD 1051" (trade name, manufactured by SKC Co.). The thickness of the protective layer is preferably from 1 to 200 µm, more preferably from 50 to 150 µm.

In a layer structure in which the protective layer is used as a laser ray path, it is necessary that the protective layer has transparency. The word "transparency" herein means that the protective layer be transparent to the extent that recording light and reproducing light can be transmitted through it(transmissivity: 90% or more).

In the case of DVD-Rs or DVD-RWs, the following are laminated instead of the protective layer: an adhesive layer made of a UV curable resin or the like; and a substrate (thickness: about 0.6 mm) made of the same material that constitutes the above-mentioned substrate, as a protective substrate.

That is, after the formation of the light-reflective layer, a UV curable resin (for example, the "SD-640", manufactured by Dainippon & Ink Chemicals, Inc.) is applied into a thickness of 20 to 60 µm onto the layer by spin coating, so as to form an adhesive layer. For example, a polycarbonate substrate (thickness: 0.6 mm) as a protective substrate is put onto the formed adhesive layer, and ultraviolet rays are radiated onto the substrate to cure the UV curable resin so as to adhere the substrate onto the light-reflective layer.

In the above-mentioned way, a laminated optical disc is produced in which the recording layer, the light-reflective layer, the protective layer or the adhesive layer and the protective substrate (dummy substrate), and so on are formed on the optical disc substrate produced by the invention.

By setting the track pitch of pre-grooves made in the substrate, the material constituting the recording material or the like appropriately, the substrate can be used in an optical disc which has a narrower track pitch than conventional DVDs or other discs and is capable of recording and reproducing information by use of a laser ray having a smaller wavelength than laser rays used therein.

### EXAMPLES

The present invention is specifically described by the following examples. However, the invention is not limited thereto.

### (Example 1)

An inorganic coating made of TiN and having a thickness of 3 µm was formed on a resin-contacting face (corresponding to numeral 22 in Fig. 1) of a nozzle of an injection molding machine (manufactured by Sumitomo Heavy Industries, Ltd.). This injection molding machine was used to continuously produce 1000 transparent substrates (made of polycarbonate) of 120 mm outer diameter, 15 mm inner diameter and 0. 6 mm thickness having a spiral groove (groove depth: 150 nm, groove width: 300 nm, and track pitch: 0.74 µm).

### (Example 2)

In the injection molding machine (manufactured by Sumitomo Heavy Industries, Ltd.), a heat insulator made of a heat resistant resin (bakelite) of 5 mm thickness was fitted to a nozzle-contacting portion (corresponding to numeral 60 in Fig. 2) of a resin inlet in a cavity side part of the machine. In the same way as in Example 1 except that this inj ection molding machine etc. were used, 1000 optical disc substrates were produced.

### (Comparative Example)

In the same way as in Example 1 except that an ordinary nozzle, in which no inorganic coating was formed, was used, 1000 optical disc substrates were produced.

The occurrences of black marks, or flow marks, in the optical disc substrates produced in Examples 1 and 2, and in the Comparative Example, were checked with the naked eye. From the number of substrates in which a defect occurred, an occurrence rate of inferior products was calculated.

In the Comparative Example, this rate was close to 50% at an initial stage, and about 5% during a period of stable production. In both Examples 1 and 2, the rate was 1% or less.

As described above, the occurrence of black marks, or flow marks, can be avoided by the use of the optical disc substrate production process of the invention so that production efficiency, in particular, yield can be enhanced.

## Claims

1. A process for producing an optical disc substrate by injection-molding a melted resin, through a nozzle of an injection cylinder, into a cavity of a mold having a stamper at at least one of a cavity side part and a force side part,
wherein at least a face of the nozzle, which contacts the resin, is coated with an inorganic coating.

2. A process for producing the optical disc substrate according to claim 1, wherein the stamper is provided at the force side part.

3. A process for producing the optical disc substrate according to claim 1 or 2, wherein the material used for the inorganic coating is TiN, BC (boron carbide), or DLC (diamond-like carbon).

4. A process for producing the optical disc substrate according to one of claims 1 to 3, wherein a thickness of the inorganic coating is set at 1 to 10 µm.

5. A process for producing the optical disc substrate according to one of claims 1 to 4, wherein the inorganic coating is further provided on a part, or over an entirety, of an inner face of the injection cylinder.

6. A process for producing the optical disc substrate according to one of claims 1 to 5, wherein the resin is at least one selected from the group consisting of polycarbonate, acrylic resins, vinyl chloride based resins, epoxy resins, amorphous polyolefins and polyesters.

7. A process for producing the optical disc substrate according to one of claims 1 to 6, wherein a heat insulator is provided at least between the nozzle and a resin inlet made in a sprue portion of the cavity side part, a resin inlet with which the nozzle is brought into close contact.

8. A process for producing an optical disc substrate by injection-molding a melted resin, through a nozzle of an injection cylinder, into a cavity of a mold having a stamper at at least one of a cavity side part and a force side part,
wherein a heat insulator is provided at least between the nozzle and a resin inlet made in a sprue portion of the cavity side part, a resin inlet with which the nozzle is brought into close contact.

9. A process for producing the optical disc substrate according to claim 8, wherein the stamper is provided at the force side part.

10. A process for producing the optical disc substrate according to claim 8 or 9, wherein the heat insulator is a heat resistant resin.

11. A process for producing the optical disc substrate according to one of claims 8 to 10, wherein the heat insulator is provided at at least a portion which is outside the nozzle and is in contact with the resin inlet, or at a portion of the resin inlet which is in contact with the nozzle.

12. An optical disc substrate produced by a process of injection-molding a melted resin, through a nozzle of an injection cylinder, into a cavity of a mold having a stamper at at least one of a cavity side part and a force side part,
wherein at least a face of the nozzle, which contacts the resin, is coated with an inorganic coating.

13. An optical disc substrate produced by a process of injection-molding a melted resin, through a nozzle of an injection cylinder, into a cavity of a mold having a stamper at at least one of a cavity side part and a force side part,
wherein a heat insulator is provided at least between the nozzle and a resin inlet made in a sprue portion of the cavity side part, a resin inlet with which the nozzle is brought into close contact.
